# EUROPEAN PATENT APPLICATION

(11) **EP 4 693 239 A1**
(43) Date of publication of application: **11.02.2026**
(21) Application number: 25306297.0
(22) Date of filing: 08.08.2025
(51) Int. Cl.: G07F 17/12

(54) **PARCEL LOCKER SYSTEM WITH AUTOMATIC CONFIGURATION**

(30) Priority: 09.08.2024 US 202418799413
(71) Applicant: Quadient Technologies France, 92220 Bagneux (FR)
(72) Inventor: LANZI, Daniel, 92220 BAGNEUX (FR)
(74) Representative: Cabinet Beau de Loménie

(57) **Abstract**

Devices, systems, techniques, and computer-readable instructions are provided that allow for use of a locker bank system by ad-hoc enterprises that do not require extensive configuration by human integrators when being enrolled in the locker bank system. When an ad-hoc enterprise is enrolled in the locker bank system, an enterprise profile is selected based on a business type and other attributes of the enterprise. The profile includes configuration settings and other behavior of the locker bank system that are appropriate for the business type of the enterprise, thus allowing for automated enrollment of the enterprise and automated provisioning of locker bank resources for use by the enterprise.

## Description

### BACKGROUND

Electronic locker bank systems are used for delivery and storage of various kinds of items. These electronic locker bank systems can be used by carrier agents for depositing shipments to be picked-up from the electronic locker bank by recipients or which may eventually be collected by a carrier agent if not picked up in due time by the recipients. In other applications, electronic locker bank systems can be used by a retailer who deposits store articles purchased by customers either on-line or in the store, so that the customers can later retrieve their purchases from the electronic locker bank. A typical architecture for electronic locker bank systems generally includes a network of electronic locker banks, all communicating directly with a remote lockers management system in charge of managing the network of electronic locker banks, and of also managing data exchanges with information systems of the retailer or of the carrier.

An electronic locker bank is often operated by a user via an integrated user interface such as a touchscreen. Some electronic locker banks can be operated with a mobile device, such as a personal digital assistant (PDA) or a smartphone, carried by the user as described in patent EP3306577. The mobile device can be used for scanning shipments for reading identification barcodes and/or shipping labels. Such operation with a mobile device is particularly appropriate for smart autonomous compartments operating without any electrical power connection and relying only on replaceable electrical batteries as described in patent application EP3671665, EP3671670 or EP3671671. For example, in the case of a carrier agent using a mobile device for operating electronic locker banks, the mobile device may provide a logistic application provided by the carrier for managing the shipments delivery and a locker bank application provided by the locker banks provider for operating the locker banks.

### BRIEF SUMMARY

Embodiments disclosed herein provide devices, systems, techniques, and computer-readable instructions that allow for use of a locker bank system by ad-hoc enterprises that do not require extensive configuration by human integrators when being enrolled in the locker bank system. In some embodiments, an enterprise profile is selected for the enterprise based on a business type of the enterprise, where the profile includes configuration settings and other behavior of the locker bank system that are appropriate for the business type of the enterprise.

### BRIEF DESCRIPTION OF THE DRAWINGS

FIG. 1 shows an example of a locker bank system.
FIG. 2 shows an example of a locker bank system in communication with an ad-hoc enterprise enrolled in the system, according to embodiments disclosed herein.
FIGS. 3A-3E show examples of processes and communication flows suitable for use with embodiments disclosed herein.
FIG. 4 shows an example process for creating a profile for ad-hoc enterprise in a locker bank system to enroll the enterprise in the system as disclosed herein.
FIG. 5 shows an example of a lookup table suitable for use in determining a business type of an ad-hoc enterprise according to embodiments disclosed herein.
FIGS. 6A and 6B show example user interfaces that may be provided on a mobile application to provide for registration of an ad-hoc business with the system according to embodiments disclosed herein.

### DETAILED DESCRIPTION

As previously described, electronic locker banks provide a variety of shipping, storage, and delivery infrastructure and options for retailers, carriers, shippers, and customers. However, conventional electronic locker bank systems typically require individual customization to be integrated into the logistics workflows of a retailer, carrier, or other enterprise. For example, developers may customize the interface options on each locker bank to match delivery options, shipping label content, and other features that vary between carriers. Furthermore, the backend systems used by a retailer or carrier to create and manage shipments often need to be customized to communicate with the locker bank system, for example to determine if a locker compartment is available at a desired location for a desired size and time of delivery, to transmit confirmation data when a shipment is retrieved, and the like. This means that conventional locker banks generally are not available for use by enterprises, such as local businesses or other smaller enterprises that do not have the resources to perform such customization.

Embodiments disclosed herein provide methods and systems that allow an electronic locker bank system to provide a non-carrier distribution channel, which may be used by any enterprise to transfer goods to customers, receive returns from customers, provide returns to any of a plurality of suppliers and/or using one or more carriers, and the like. For example, embodiments disclosed herein may allow for small and local businesses to take advantage of the benefits of a full-scale locker bank system without the need for costly and time-consuming customization. As used herein, a "non-carrier" distribution channel refers to one that is not linked to an individual parcel carrier, but instead is available for use by multiple parcel carriers or directly by businesses and customers without the need for a carrier intermediary at all. A non-carrier distribution channel may be managed by a third party that coordinates the availability, use, and maintenance of one or more parcel lockers.

One example of a non-carrier distribution channel is an open locker system, which allows for multiple carriers such as national, regional, or local postal carriers, private third-party carriers such as FedEx, DHL, UPS, and the like, or combinations thereof to make use of the locker bank devices to deliver parcels to recipients and collect outbound parcels such as retail returns from shippers. Open locker systems thus may allow, for example, a retailer to use multiple carriers to ship parcels to customers and/or to receive return parcels from customers.

Similarly, a non-carrier distribution system or channel may be used by businesses, such as local businesses or other smaller enterprises, to provide and/or receive goods directly from their customers. For example, embodiments disclosed herein allow enterprises such as local businesses to make use of an open locker system as disclosed herein to provide goods directly to their customers, receive returns or exchanges directly from their customers, and the like, without the need to use commercial third-party carriers such as FedEx, UPS, DHL, and the like. The use of such carriers often may be too technically complex, costly, and/or inefficient for smaller enterprises to implement in conjunction with their internal inventory and order delivery systems. Embodiments disclosed herein thus provide a technical solution to the problems that smaller enterprises may face when scaling up delivery of goods, receipt of returned merchandise, and the like, at the point where larger enterprise carrier systems are overly complex relative to the needs of the enterprise.

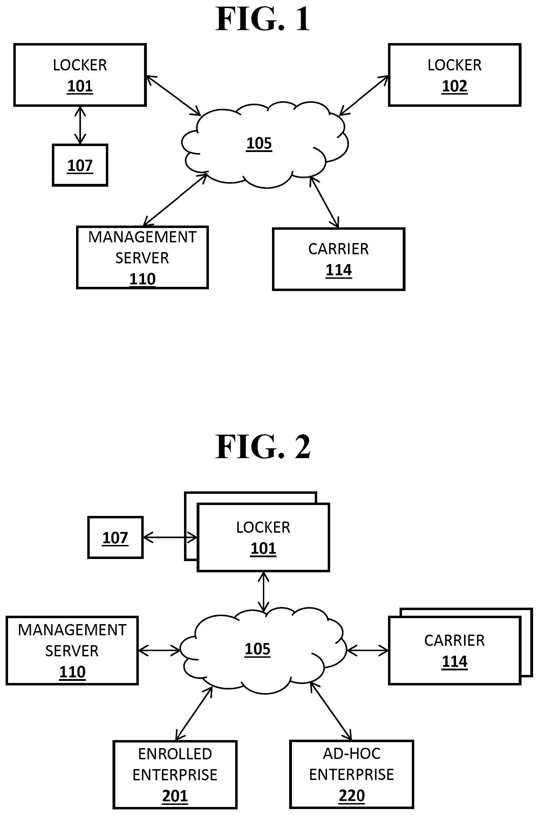

FIG. 1 shows an example of a parcel locker bank system, which also may be referred to as a "parcel locker system," "locker network," or the like, which includes one or more electronic locker banks 101, 102. Each locker bank 101, 102, and so on may include multiple lockers within it, i.e., the individual compartments used to store items being transferred between a business and its customers or other senders and recipients. Each locker bank typically includes multiple lockers that may vary in size to allow for transfer of a variety of items. The operation of individual lockers within each locker bank may be the same as disclosed herein with respect to a locker bank unless noted otherwise or made clear by contextual requirements; for example, in some embodiments each locker within a locker bank may be managed as disclosed herein with respect to a locker bank. An individual locker within a locker bank also may be referred to as a "compartment" in the present disclosure. The locker banks may communicate with user devices such as mobile phones, tablets, or the like, via short-range local communications systems known in the art. For example, a locker bank 101, 102 may provide an interface for carriers to provide parcel information, verify delivery, and the like, and/or for recipients to retrieve parcels that were previously delivered to the locker bank, such as via a mobile device 107. For an enterprise to have access to the locker banks in the system, the enterprise must be enrolled in the system. Once enrolled, an enterprise can use locker banks in the system to send and/or receive items, either directly to/from a recipient or via a carrier.

A locker bank management server 110 may communicate with one or more locker banks 101, 102 via a communication network 105 such as virtual private network (VPN), the Internet, or the like. The management server 110 manages authorization access to the electronic locker bank and data regarding shipments handled by each electronic locker bank 101, 102. As used herein, a "management server" may refer to any appropriate combination of one or more server-type computing devices, operating alone or in tandem, to provide the services disclosed herein. A management server may include one or more physical computer servers, which may operate as a cluster, coordinated network, cloud network service, or the like.

In a closed or proprietary locker system, the management server 110 may be owned and operated by a single carrier that also owns and manages the locker banks 101, 102. In this arrangement, the locker banks 101, 102 are only available for use by the carrier that owns them. Alternatively, the locker banks 101, 102 may be part of an open locker network that allows for use of the locker banks by multiple carriers. In this arrangement, the management server 110 may be owned and operated by a third party, typically a non-carrier entity, such as Quadient. One or more carriers 114 may interface with the management server 110 by communication over a long-range network, which may be the same communication network 105 used to communicate with the individual locker banks 101, 102, or it may be a separate network, for example to obtain availability information, delivery confirmation, and the like. Similarly, in embodiments disclosed herein, enterprises such as local businesses may communicate with the management server, such as via an app on a local device such as a smartphone or tablet, to obtain information about lockers and/or locker banks available for use by the enterprise, obtain delivery confirmation, and the like.

Each electronic locker bank 101, 102 includes multiple compartments of different sizes. Each compartment may be equipped with an electronically controlled door, parcel delivery sensors, and the like. The electronic locker bank can be used, for example, for depositing shipments for retrieval by recipients of these shipments, or by retailers for depositing articles purchased by their customers and/or receiving returns from their customers, and the like. Locker banks 101, 102 may be installed in public outdoor or indoor locations, on the premises of various businesses, in apartment buildings, private communities, universities, or the like.

In an open locker network, information systems of a carrier 114 or a retailer may communicate with the management server 110 for managing shipments and articles delivery and collection via a long-distance communication network such as the long-distance communication network 105. The management server 110 can centralize data for multiple information systems of different carriers. The electronic locker bank can be operated for depositing retail articles or shipments with a mobile device 107, such as a personal digital assistant or a smartphone, carried by a carrier agent. The electronic locker bank can also be operated for depositing or retrieving shipments with a mobile device 107, such as a smartphone, carried by a retailer customer or a shipment recipient. The information systems 114 of the carrier communicate with the mobile device 107 via a long-distance communication network such as the long-distance communication network 105.

Further details regarding locker banks 101, 102 and examples of the configuration and operation of locker bank systems are provided in European Patent Application Nos. EP3306577, EP3671665, EP3671670 and EP3671671, and U.S. Patent Nos. 11,386,389 and 11,657,365, the disclosure of each of which is incorporated by reference in its entirety. Examples of open locker networks suitable for use with embodiments disclosed herein are described in further detail in U.S. Patent Application Nos. 18/424,454, filed January 26, 2024 and published as 2024/0257042, and 18/424,439, filed January 26, 2024 and published as 2024/0257041, the disclosure of each of which is incorporated by reference in its entirety.

FIG. 2 shows an embodiment as disclosed herein, in which different types of enterprise use a locker network that includes multiple locker banks 101 including any number of locker banks managed by one or more management servers 110. As previously disclosed with respect to FIG. 1, in an open locker network any number of carriers 114 may be provided access to the locker network. A recipient of a parcel delivered to a locker in a locker bank 101 may access the locker storing the parcel via a local mobile device 107; similarly, individuals such as customers of a retailer or other enterprise may deposit items to be returned via a retailer or other enterprise return process at a locker bank 101 via interaction with a local mobile device 107 as previously described, and/or carriers 114 may access a locker bank via a local device 107 such as to deposit and/or retrieve parcels from lockers within the locker bank 101.

Two different types of enterprise may be provided access to a locker bank 101. In a conventional locker network, an enrolled enterprise 201 typically is a large retailer, such as a regional, national, or international entity, that makes use of a locker network to deliver parcels to customers, receive returns from customers, and the like. As previously disclosed, an enrolled enterprise 201 typically will have been enrolled in the locker bank system via customized software, integration with the enterprise's existing logistics systems, and the like. The operation of a locker bank 101, management server 110, and carriers 114 with respect to an enrolled enterprise 201 generally will be the same in systems disclosed herein as in a conventional locker bank system.

The other kind of enterprise that may use a locker bank system as disclosed herein is referred to as an "ad-hoc" enterprise. Embodiments disclosed herein provide ad-hoc enterprises access to the locker bank system without the need for extensive enrollment processes, customization, integration with existing logistics systems, and the like. An ad-hoc enterprise 220 may be, for example, a small or local retailer or other business, a regional business, or the like, which may not have extensive logistical support or may rely on third-party systems, such as hosted systems, to provide such support. Embodiments disclosed herein allow an ad-hoc enterprise 220 to make similar use of locker banks 101 via simplified processes and user interfaces, by automatically configuring operation of the locker banks based on the type of business conducted by the enterprise 220. For example, a shoe retailer, a local business that delivers perishable goods to its customers, and a local business that only uses the locker bank to receive merchandise being returned by local customers may wish to use different behaviors for operation of the locker banks. In some embodiments, a single locker bank or a network of locker banks may be configured for conventional use, ad-hoc use, or a mixture of the two. In some embodiments, individual lockers may be reserved for use only by one type of enterprise, such as where a portion of the lockers within a locker bank are reserved for ad-hoc use and not made available for conventional use. In some embodiments, all lockers within an entire locker bank may be reserved only for conventional use or only for ad-hoc use. In some embodiments, individual lockers may be configured for both conventional and ad-hoc use, for example where the locker is available for either use case based on first use, expected or projected demand, known availability, or the like.

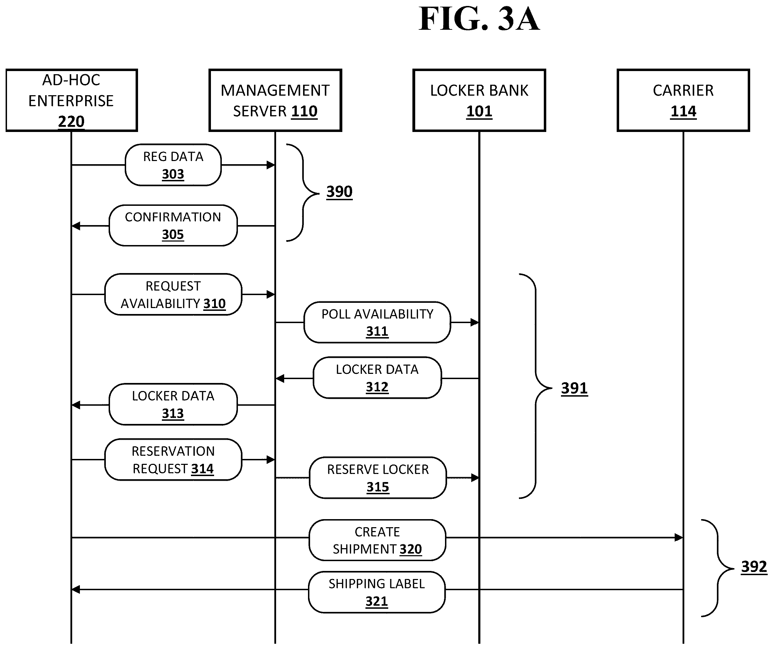

FIGS. 3A-3E show various operations and associated communication between locker banks and other entities according to embodiments disclosed herein. Examples of processes that may be performed within a locker bank system include a registration process 390, locker compartment reservation process 391, label creation process 392, carrier shipment creation and delivery 393, direct item delivery 394, direct item return 395, and product retrieval process 396. Generally, each process may be performed independently of the others and in any order, unless logically required or disclosed otherwise herein. For example, the registration process 390 generally would be required before any other processes may be used, but the reservation process 391 may be used before, after, or concurrently with the other processes, such as where an enterprise uses a locker bank for more than one customer, or it may be omitted entirely where the retailer does not choose explicitly to reserve a locker ahead of time. Similarly, some processes may be automatically launched or performed by a locker bank system as disclosed herein, entirely or in part. For example, a reservation process 391 may be performed by a user of the locker bank system to reserve a locker before a shipping label creation process 392 or equivalent process has been performed, or it may be launched automatically as part of a shipment creation process 393. Some steps may be omitted from some of the processes. For example, for some shipment creation processes 393, a shipping label may not be needed. This may be the case, for example, where a business is providing an item to a customer but does not want the item to be transported by a carrier, such as where the customer is local to the business and/or the locker bank, where the business is returning an item (such as a repaired item) to the customer, or the like. In that case, the step of confirming parcel availability 334 may be omitted and a concurrent or prior label creation process 392 may be omitted. In some embodiments, the locker bank will update the management server upon successful loading of a parcel into a locker within the locker bank, regardless of whether the parcel is being transferred to the recipient via a carrier or for direct collection by the recipient.

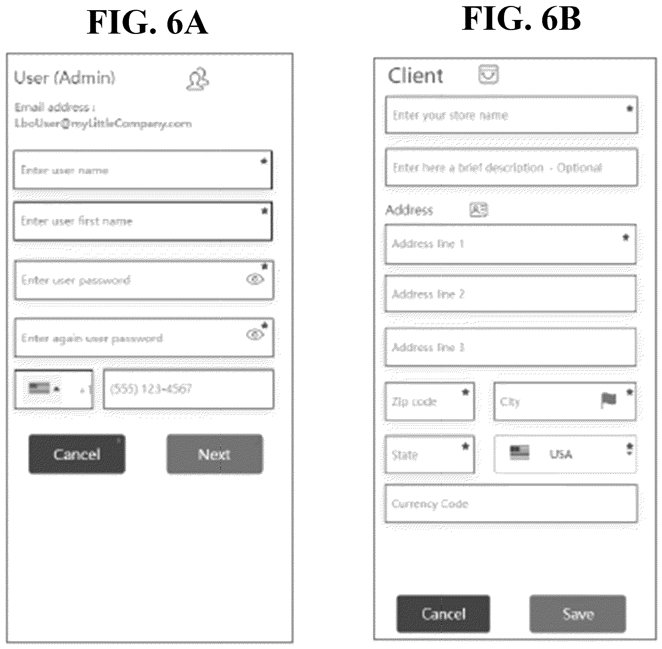

FIG. 3A shows a registration process 390. In this process, an ad-hoc business may register with a locker bank system as disclosed herein, such as a system that includes a management server 110 and locker banks 101 as previously disclosed. At 303, a user associated with the business 220 may send a registration request 303 to the management server 110. This, and all other communications with the ad-hoc business, may be done via an app executing on a mobile device such as a smart phone, tablet, or the like. The app may be in communication with the management server 110 and/or the locker bank(s) 101 and may provide information to the locker bank(s) via short-range wireless communication techniques and/or by generating computer-readable codes such as bar codes, QR codes, or the like. Typical registration data may include, for example, user details such as name, email address, phone number, password, and the like. Registration data also may include business-specific information for the ad-hoc enterprise, such as a business name and description, business address or other location, city/region, website, and the like. Notably, no other registration process may be needed to allow the ad-hoc business 220 to begin using the locker bank network. FIGS. 6A and 6B show example user interfaces that may be provided on a mobile application to provide for registration of an ad-hoc business with the system. At 305, the management server 110 may confirm registration of the ad-hoc enterprise 220, such as via an email confirmation, a message displayed in the mobile application, or the like.

FIG. 3A also shows a locker compartment reservation process 391. Such a process may be used, for example, when a user wishes to reserve a compartment in a locker bank for future use. At 310, the user may request locker bank compartment availability information, either for a specific locker bank (such as a bank near the business or an intended customer recipient), or for any suitable locker bank, such as where multiple locker banks are available in the business' region. In response to the request, the management server 110 may obtain locker bank compartment availability information, which may be stored locally in a database of the management server 110, and/or it may be obtained by polling relevant locker banks 101 via individual requests 311. It may be preferred for the management server 110 to maintain a continuously-updated database of compartment availability, for example by updating the database each time confirmation is received from each locker regarding successful delivery/use of compartments, retrieval/emptying of compartments upon successful delivery, and the like. Examples of configurations and processes for managing such a database of locker compartments and their status are provided in U.S. Patent Pub. No. 2023/0316836, filed November 28, 2022, the disclosure of which is incorporated by reference in its entirety.

Based on availability data 312, the management server 110 may provide relevant locker compartment data to the ad-hoc user device at 313. The data may show locker banks in the business' area, or in a region near the user's device, or in a "home" region previously defined for the business, which have compartments available for use by the business. For example, an app on the ad-hoc business user's device may show a map of locker banks in the relevant region with an indication of how many and what type or size compartment are available at each one. As another example, the user may be provided with a list of compartments available for use.

At 314, the ad-hoc user may send a request to reserve a specific locker compartment, a specific type of compartment, and/or a compartment in a specific locker bank to the management server 110. The management server 110 may then change the status of an appropriate compartment to show that it has been reserved at 315. The "reserved" status of the compartment may be tracked in a database at the management server 110, by the associated locker bank 101, or combinations thereof. A locker compartment reserved in this way may be kept for use only by the reserving ad-hoc enterprise 220 for a specific amount of time, until an item is delivered to the compartment, for an amount of time based on the overall or enterprisespecific type of locker compartment available at the locker bank or in the region, or for any other desired amount of time. After a delivery has been completed through the reserved compartment, the compartment may be returned to an "available" status or equivalent, to make it available for use in the locker bank again. In some embodiments, if a predetermined time has lapsed without the parcel being retrieved. , the sender of the parcel may be notified that the parcel was not retrieved by the recipient and should be collected by the sender to allow for the locker compartment to be re-used. The compartment may be left in a "reserved" or "used" status until the sender retrieves the parcel. In some embodiments, such retrieval also may be indistinguishable from retrieval by the recipient, thus resulting in the locker compartment being returned to an "available" status as it would if the parcel was retrieved by the intended recipient.

The reservation process 391 may be performed in association with a specific delivery of an item through the reserved compartment. For example, when a user generates a shipment or other delivery as described with respect to processes 393, 394 below, an equivalent reservation process may be performed. The reservation process 391 also may be performed by a user in expectation of a need for the compartment, before a specific shipment or delivery is being created. In that case, the interface of the ad-hoc user's device may provide an option to link a newly-generated shipment or delivery to the existing reservation and use the reserved compartment for the delivery. In some embodiments, a reservation may be made by, or may be equivalent to, an advanced shipment creation. That is, a reservation and the creation of a shipment may not be done via separate processes, but rather a single shipment process may be used which results in a "reservation" of a compartment for the created shipment.

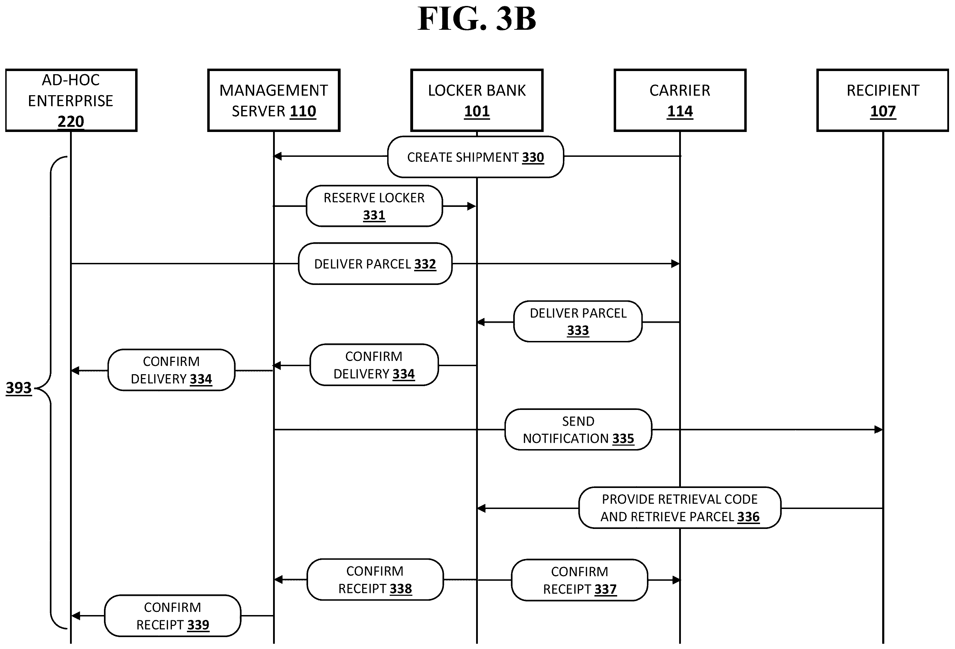

Sometimes an ad-hoc business 220 may wish to use a carrier to deliver a parcel to a customer which will be picked up from the business and delivered to a locker bank. In this case, a label creation process 392 may be used to generate a shipping label for use by the carrier when delivering a parcel. At 320, a shipment may be created by the ad-hoc business 220. The shipment creation process may follow a process as described in FIGS. 3B-3C, or it may follow a process as defined by the carrier 114. In response to an appropriate request or notification of a shipment, at 321 the carrier 114 may generate a shipping label and provide it to the ad-hoc enterprise 220 or to the recipient 107, for example where a return has been initiated through the business 220.

A similar process to the label creation process 392 may be used, for example, where an ad-hoc business has instructed a customer to return a purchased item via a locker bank. In this case, the business may send the label generated at 321 to the customer, or the business may instruct the customer to generate the label themselves, for example using payment information provided by the business. The label may be created via the ad-hoc business user's mobile device, typically via an app provided by an associated carrier that may be installed on the device concurrently with an app that may communicate with the management server as disclosed herein. That is, the user's device may include separate apps to communicate with a management server that controls a locker bank as disclosed herein, and to communicate with one or more carriers to generate shipping labels that may be used in conjunction with embodiments disclosed herein or may be used separately from the ad-hoc locker bank processes disclosed herein. More generally, any time a carrier is used by the ad-hoc business to deliver an item to or from the business, a locker bank, or a customer, a shipping label may be created through a process similar to those described herein, or using any conventional label creation process and interface available from the carrier.

FIG. 3B shows an example delivery process 393 in which the ad-hoc enterprise 220 provides a shipment to a carrier for delivery to a recipient 107 via a locker bank 101. At 330, the ad-hoc enterprise may initiate a shipment by, for example, notifying a carrier, which may then create a shipment and notify the locker bank system, via management server 110, of the shipment. This may be done, for example, via a user interface of a mobile application, in which a user at the ad-hoc enterprise 220 indicates that a new shipment is needed. A shipment creation interface may be provided in the same mobile application as in embodiments in which a carrier is not involved, or it may be provided in a separate mobile application such as one provided by a carrier. An example of a suitable interface is shown in FIG. 6B. As part of creating the shipment at 330, the ad-hoc enterprise 220 may have previously created a shipping label with the carrier 114, such as via the process 392 shown in FIG. 3A. In that case, a tracking number, label number, or the like may be provided to the management server 110 via the mobile application. The tracking number may be provided, in turn, to the locker bank 101. When the carrier 114 subsequently delivers the package at 333, the locker bank 101 may scan the shipping label to read the tracking number, and thereby confirm that the package being delivered matches the shipment created at 330.

At 330, the management server 110 may reserve a compartment in a suitable locker bank. The particular locker bank used may be chosen by the enterprise 220 when the shipment is created at 330, or it may be assigned by the management server 110. For example, the management server 110 may select a locker bank in the region of the ad-hoc enterprise 220; or the management server 110 may select the bank 101 from a set of banks previously selected by the ad-hoc enterprise 220 as being acceptable delivery points; and/or the management server 110 may coordinate with a logistics system of the carrier 114 to select a suitable locker bank. Where the locker bank 101 is not selected by the ad-hoc enterprise 220, the management server 110 may inform the user of the location of the locker bank 101 to be used. At 331, the management server 110 may instruct the selected locker bank 101 to reserve a locker compartment for the item to be delivered.

At 332, the carrier 114 may receive the item to be delivered from the ad-hoc enterprise 220. For example, the item may be deposited in a shipping kiosk, picked up by the carrier 114, or the like. The carrier 114 then delivers the item to the locker bank 101 at 333. To deliver the item, the carrier 114 may provide the tracking number to the locker 101, such as by scanning a bar code, QR code, or the like, at which point the locker 101 may retrieve information about the item and open an appropriate compartment to receive the item, such as a compartment reserved at 331.

The locker bank 101 may confirm delivery at 334 to the management server 110 and/or to the ad-hoc enterprise 220, or the management server 110 may confirm delivery to the ad-hoc enterprise 220. For example, the ad-hoc enterprise 220 may receive a notification on the mobile application used to initiate the shipment at 330 indicating that the item was successfully delivered to, and received by, the locker bank 101.

The locker bank 101 or the management server 110 may send a notification to the recipient 107 at 335, for example via email, text message, or the like. The mode of communication used to notify the recipient 107 may be selected by the ad-hoc enterprise 220, for example during the process of creating the shipment at 330 or via a stored customer profile maintained for the recipient 107 by the ad-hoc enterprise 220, or the like. The notification 335 may include a computer-readable code such as a bar code, QR code, or the like and/or a retrieval code that the recipient 107 can enter into a user interface of the locker bank 101. At 336, the recipient 107 may retrieve the item from the locker bank 101 by presenting the computer-readable code via a scanner, user interface, or the like.

Once the item is retrieved, the management server 110 may confirm receipt to the carrier 114, management server 110, and/or the ad-hoc enterprise 220 at 337, 338, 339, as shown. Confirmation may be provided to the carrier via an electronic message through an API or the like, and to the ad-hoc device user via email, text message, or notification in the mobile application of the user's device.

Processes similar to the delivery process 393 may be used when a carrier is involved at other steps of a delivery or other shipment, such as where a recipient 107 wishes to return an item to a retailer ad-hoc enterprise 220. For example, the recipient 107 may receive a shipping label from the ad-hoc enterprise 220 and use it to ship a returned item via a carrier 114, who may deliver the item to a locker bank 101 for retrieval by the ad-hoc enterprise 220.

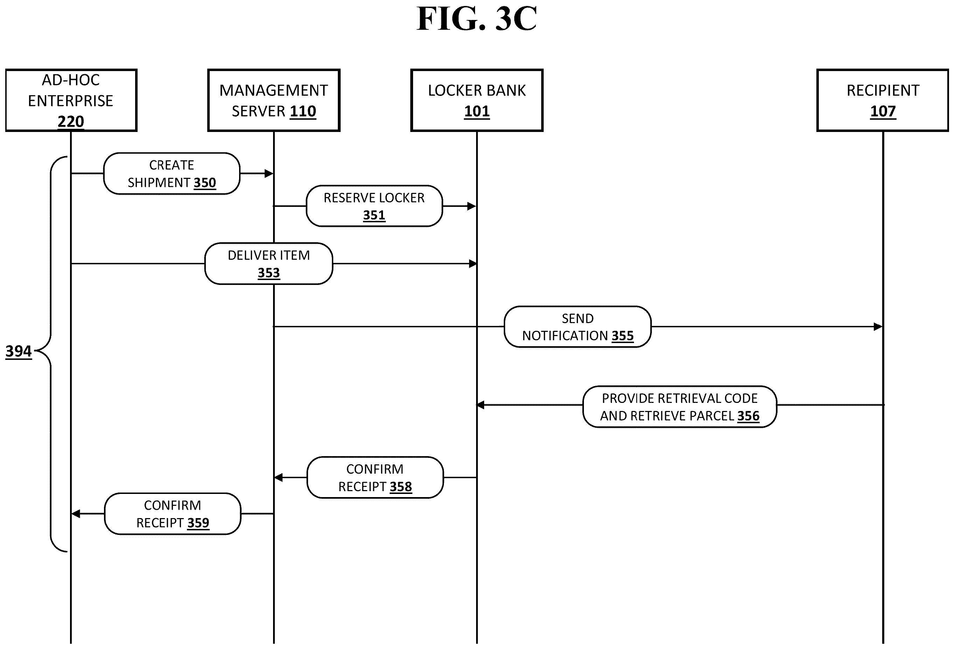

FIG. 3C shows an example delivery process 394 in which the business 220 delivers an item to a recipient 107 via a locker bank directly, without using a carrier. At 350, 351, a user of the ad-hoc enterprise 220 may create a shipment, as previously described with respect to 330, 331 in FIG. 3B. In this case, because a carrier 114 is not involved, the ad-hoc enterprise 220 may provide an internal reference number or tracking number for the shipment, such as via a mobile application interface shown in FIG. 6B, instead of a carrier tracking number. For example, the enterprise 220 may provide an order number, a return authorization number, or the like, depending on the context in which the item is being provided to the recipient 107. As described in further detail herein, the specific operation of the locker bank 101 with regard to any shipment created by the ad-hoc enterprise 220 may be defined in an ad-hoc enterprise profile generated and stored by the locker bank system, such as at the management server 110.

At 353, the ad-hoc enterprise 220 may deliver the item to the locker bank. For example, the user may enter a shipment number or scan a computer-readable code generated by the management server 110 at the locker bank 101, at which point the locker bank 101 may open a suitable locker compartment to receive the item.

After the item is delivered, the management server 110 may send a notification to the recipient 107 at 355 to indicate that the item is available for pickup by the recipient 107. The notification may include a computer-readable item such as a bar code, QR code, or the like, a retrieval code, or other information that the recipient can use to retrieve the item at 356. For example, the recipient 107 may present a QR code from the notification 355 to a scanner of the locker bank 101, in response to which the locker bank 101 may open the locker compartment in which the item was stored to allow for retrieval by the recipient 107. The locker bank 101 may have previously received the code from the management server 110, and may have received other identifying information (such as where additional security features are indicated) from the ad-hoc enterprise 220, that can also be presented to the locker bank 101 for verification based on data received from the management server 110.

At 358, 359, the locker bank 101 and/or management server 110 may confirm receipt of the item as shown.

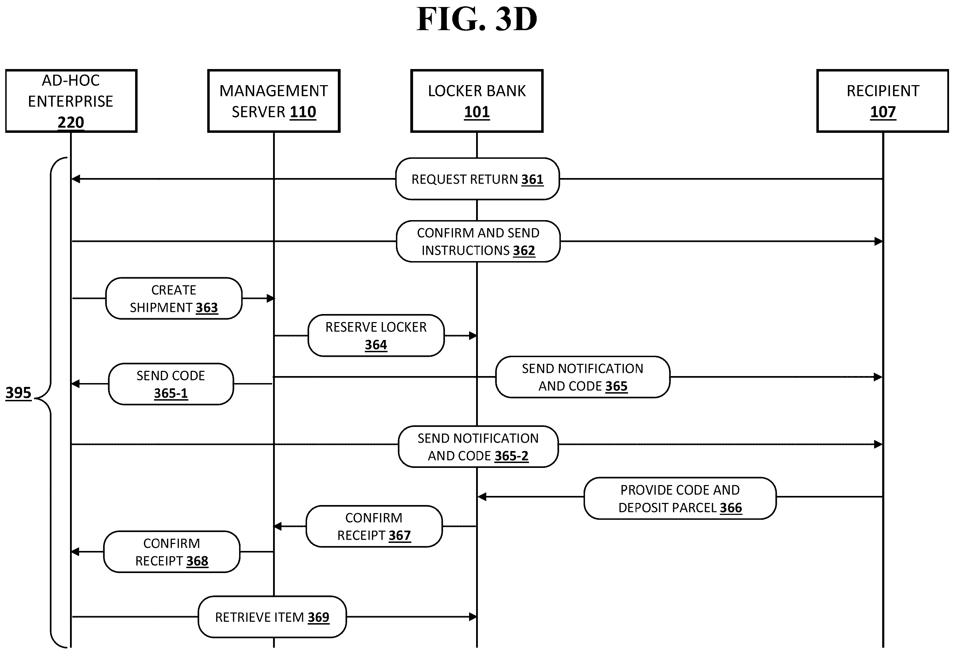

FIG. 3D shows an example delivery process 395 in which an item is sent from a customer to the ad-hoc enterprise, such as for a product return. At 361, the customer 107 may send an initial message to the ad-hoc enterprise 220, such as to request a returned merchandise authorization or similar. The ad-hoc enterprise 220 may response with a confirmation and further instructions at 362, for example to notify the customer 107 to expect a further communication with a return code.

The ad-hoc enterprise user may create a shipment at 363, 364 as previously disclosed.

At 365, the management server 110 may send a notification to the customer 107 including a return code or similar code, which the customer 107 can use to send the item to the ad-hoc enterprise via a locker bank 101. As previously disclosed, the specific locker bank may be selected by the ad-hoc enterprise 220 when the shipment is created at 363 or in earlier configuration of the ad-hoc enterprise 220 in the locker bank system. Alternatively, the ad-hoc enterprise 220 and/or the locker bank system via the management server 110 may provide a set of locker banks from which the customer 107 may select.

In some embodiments, the management server 110 may send the return code to the ad-hoc enterprise 220 at 365-1, for example by providing it via a mobile application. In this embodiment, the ad-hoc enterprise 220 may provide the return code to the customer 107 at 365-2, which may be sent as a single communication with the initial confirmation 362. The return code provided to the customer 107 at 365 or 365-2 may be, for example, a computer-readable code such as a bar code, QR code, or the like, or a code that the customer 107 can provide to the locker bank 101 via any other suitable user interface such as a keyboard, touchscreen, or the like.

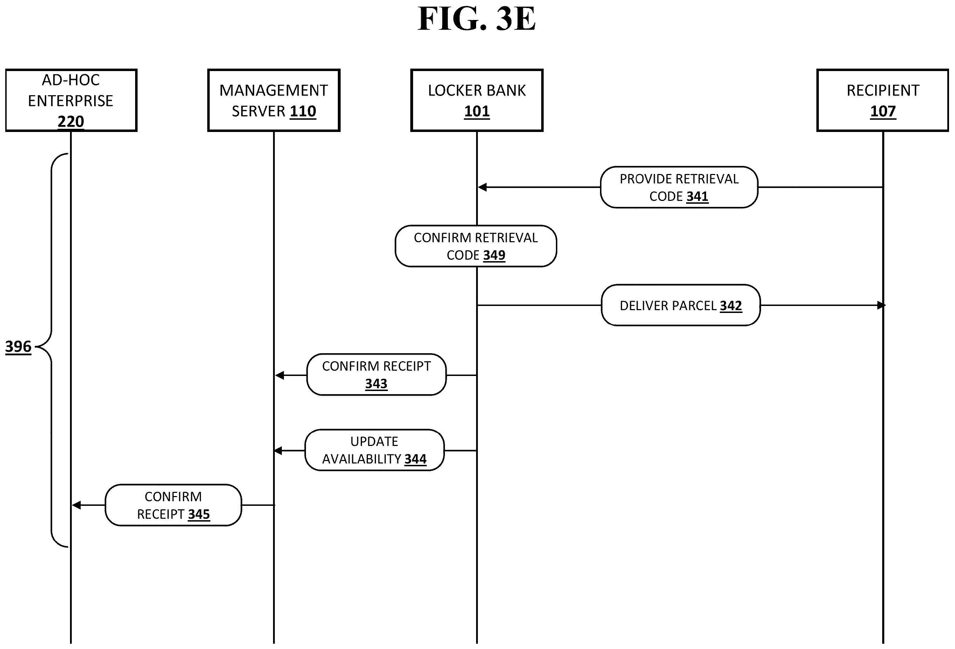

At 366, the customer 107 may provide the item to the locker bank 101. For example, the customer 107 may scan a bar code, QR code, or the like at the locker bank 101 or enter the return code received at 365, 365-2 via another user interface. In response, the locker bank 101 may open a suitable locker compartment, such as a compartment that was reserved for this purpose at 364. Once the customer 107 deposits the item in the compartment and closes the door, the locker bank 101 and/or the management server 110 may notify the ad-hoc enterprise 220 at 367, 368, respectively, that the item has been received and is available for pick-up by the ad-hoc enterprise 220. The item may then be retrieved at 369 via a similar process or by a process as shown in FIG. 3E. For example, an ad-hoc enterprise user may log in to the locker bank 101 by providing conventional credentials such as a login/password combination and/or by scanning a computer-readable code, such as a bar code or QR code generated by the mobile application used to interface with the locker bank system.

FIG. 3E shows an example item retrieval process 396 performed by a recipient of an item. The process shown in FIG. 3E may be used by any entity or individual retrieving an item from a locker bank according to embodiments disclosed herein. For example, the recipient 107 may be a customer, partner, or affiliate of the ad-hoc enterprise 220, or it may be the ad-hoc enterprise 220 itself, such as where a customer is returning an item. In some cases, the sender and recipient may both be associated with the ad-hoc enterprise, such as where a business with multiple locations uses locker banks 101 to transfer items between different business locations.

At 341, the recipient 107 provides a retrieval code to the locker bank 101. The retrieval code may be a return code, delivery code, or any other human and/or computer-readable code provided to the recipient 107 in association with an item stored at the locker bank 101, as previously disclosed. The retrieval code may be generated in a prior process, such as by a carrier 114, the ad-hoc enterprise 220, or the locker system via management server 110. In some embodiments, the retrieval code is generated within a mobile application used by the ad-hoc enterprise 220 to coordinate shipments with the locker bank system via management server 110.

The locker bank 101 may confirm the validity and/or authenticity of the retrieval code at 349. For example, the locker bank 101 may communicate with the management server 110 or consult an internal database to determine if the retrieval code has been cancelled since it was provided to the recipient 107. This process allows the ad-hoc enterprise to cancel retrieval codes individually or in bulk, for example if the enterprise 220 is concerned about theft, issued retrieval codes in error, or the like. Retrieval codes also may be set by the ad-hoc enterprise 220 to expire within a certain time period, either as a general preference or individually at the time the retrieval code is generated or an associated shipment is made. In some embodiments, the lifetime of the retrieval code may be set by configuration options determined when the ad-hoc enterprise is enrolled in the locker bank system, as described in further detail herein. As previously disclosed, other configuration options may affect delivery and retrieval of items from the locker bank 101 by changing the behavior of the locker bank 101. For example, the configuration options may require two-factor or multi-factor authentication of the recipient 107; the locker bank 101 may require or prohibit the use of "automatic" codes that would normally be scanned by the locker bank 101 to allow access to the stored item; the locker bank 101 may require a signature of the recipient 107, such as via a touchscreen or equivalent, or the like.

After confirming that the retrieval code is valid and authentic at 349, the locker bank may deliver the item stored in a compartment to the recipient at 342. For example, the locker bank 101 may automatically open the associated locker compartment to allow access to the stored item.

The locker bank 101 and/or the management server 110 may confirm receipt of the item to the management server 110 and/or the ad-hoc enterprise at 343, 345, respectively.

In this and other processes disclosed herein, the locker bank 101 and the management server 110 may confirm and update the availability of compartments in the locker bank 101 at 344. For example, once delivery is confirmed at 343, the management server 110 and/or the locker bank 101 may update a database to indicate that the compartment is available for use.

As described in further detail herein, the specific operation of the locker bank 101 with regard to any shipment created by the ad-hoc enterprise 220 may be defined in an ad-hoc enterprise profile generated and stored by the locker bank system, such as at the management server 110. The behavior may vary depending on the type of shipment, which process(es) in FIGS. 3A-3E are used, and the like. For example, the locker 101 and management server 110 may be configured to hold an item for a set period of time after receiving it for delivery to the recipient 107, based on the type of business identified for the ad-hoc enterprise 220. As another example, the ad-hoc enterprise 220 may indicate via the mobile application interface or other interface that a particular item is personal or confidential item that requires heightened security, or the ad-hoc business may be one that is configured for secure delivery generally, in which case the locker bank 101 may be configured to use two-factor authentication or other security enhancements before providing the item to the recipient 107.

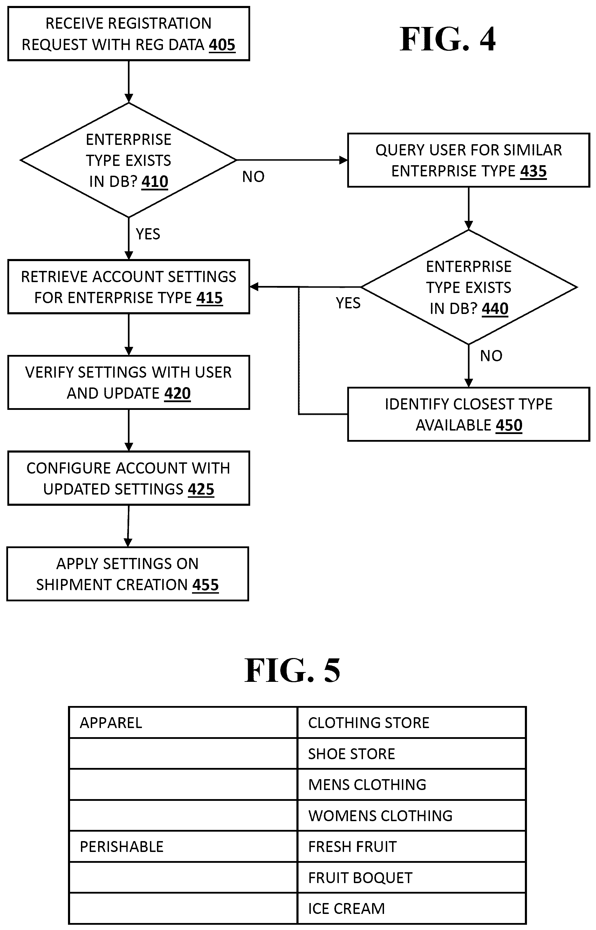

FIG. 4 shows an example process for creating a profile for ad-hoc enterprise in a locker bank system to enroll the enterprise in the system as disclosed herein. As previously disclosed, the registration process for an ad-hoc enterprise does not require individual specific customization of the locker bank behavior for each business. Rather, the configuration may be performed automatically by the management server based on the type of business or other information about the business obtained by the management server.

At 405, the locker bank system may receive a request from a new ad-hoc business to gain access to the locker bank network. For example, a business may download and install a mobile application provided by the locker bank system, such as via a third-party app store or equivalent, and request a new account to be created. The registration request may be the same as the request 303 described with respect to FIG. 3A and may include, for example, the information in the registration process screens shown in FIGS. 6A-6B. One item of information provided for the ad-hoc enterprise may be the type or category of business. Types and categories of business may be broad, such as "retail" or "perishable delivery," or they may be relatively specific, such as "pharmacy," "shoe store," "women's jewelry and accessories," and the like.

At 410, the locker bank system may determine if the identified type of business is listed in an internal database. For example, a management server as previously disclosed may include, or be in communication with, a lookup table or other database structure that includes business types recognized by the system. In some embodiments, the types of businesses in the database may be provided as a list for selection by the user. In other embodiments, the registration interface may allow for free-text entry by the user and subsequently perform text matching to determine if the business type is present in the database. If the business type is found, or in embodiments in which the user can only select from available business types, the process continues to 415. If the business type is not found, at 435 the system may query the user to confirm or identify a "closest" type of business at 440. The closest business may be found via various text matching techniques at 450, or it may be found through a similarity lookup table such as the example shown in FIG. 5. In some embodiments, the "closest" business may be identified by a machine learning (ML) or other artificial intelligence (AI) system that has been trained on prior known-correct assignments of business types. Similarly, specific configuration options as disclosed herein may be selected by an AI system that has been trained on known-correct business profiles and configuration settings for a variety of business types and configurations.

At 440, if the updated business type is found, the process continues at 415. Otherwise, the system may identify a "best match" closest type of business at 450. This business type may be found via text matching, lookup table, or using various forms of automated machine learning and similar techniques. For example, as ad-hoc business are added to the system and make use of the locker network, a machine learning system may be trained to determine business types that have similar usage patterns, configuration needs, and the like. The system may use this training to identify or suggest a "best match" business type.

At 415, the system may retrieve configuration settings for the locker banks in the system, based on the business type identified through the previous steps. For example, if the ad-hoc business being registered is identified as a florist, configuration settings for a "florist" business type may be loaded and associated with a new ad-hoc business record created in the locker bank system for the new ad-hoc business. As another example, jewelry shops in Japan may prefer their customers to enter a signature on the screen when retrieving presumably high value goods from the locker bank. Accordingly, a "jewelry store" profile may be configured to allow consumers to enter their signature on the screen, whereas some other kinds of businesses, such as presumably low-value grocery delivery businesses, will not require a signature. The configuration may be selected and set based on region. Continuing the previous example, if jewelry stores in other regions typically do not require a signature, a signature requirement may be implemented in a "jewelry store" profile in Japan but not in other regions. More generally, a signature requirement may be included in business profiles that are intended for businesses that send and receive high value goods, goods of high sensitivity or importance, goods having privacy implications, or the like.

Regardless of the specific configurations included in the business type profile, the locker banks will then operate using those configuration options whenever a shipment/delivery is created by the ad-hoc business. Each business type defined in the locker bank system may include a setting for some or all of the configuration options available for locker banks in the system. For example, each business type may be associated with an enterprise profile that includes values for some or all of the configuration options shown in Tables 1-4, below. Alternatively, each enterprise profile may only specify values for some configuration options and allow the others to be undefined or set to system-wide defaults, in which case the locker banks in the system will behave according to default predefined behaviors when used by the ad-hoc network. Each entity profile may be stored in a database maintained by the management server. When an ad-hoc enterprise makes use of the locker banks, such as via processes as shown in FIGS. 3A-3E, the enterprise profile may be consulted by the management server and/or the locker bank(s) involved in the process, or the profile may otherwise be used to define the behavior of the locker bank(s) for those processes.

At 420, the system may present the configuration options selected for the ad-hoc business for review and confirmation by the user. The user may have the option of changing individual settings at this point. Alternatively or in addition, the user may have the option of selecting a different business type that may have different configuration options. In some cases, the system may not show the selected business type and/or configuration settings to the user and may continue directly to step 425. Similarly, in some embodiments the user may not be notified that different business types have different locker bank configurations, and the system may proceed to step 425 without further user interaction.

At 425, the associated configuration settings, or a profile referencing all relevant settings, may be associated with the ad-hoc business' record in the locker bank system. When shipments are created later at 455, for example using the processes described in FIGS. 3A-3E, the settings associated with the ad-hoc business may be used to control behavior and operation of the locker banks for shipments created by the ad-hoc enterprise.

FIG. 5 shows a simplified example of a lookup table that may be used to identify appropriate configuration settings for a particular business. In this example, the locker bank system has broad or high-level categories for businesses, including "apparel" and "perishable." Each of those categories is associated with a variety of configuration options as disclosed herein. It is expected that users creating new ad-hoc enterprise accounts may not provide business types that exactly match the broad categories, so they are mapped to potential equivalent user responses. In this example, "clothing store," "shoe store," "men's clothing," and "women's clothing" are all mapped to the "apparel" type and use the same locker bank configuration settings. Similarly, "fresh fruit," "fruit bouquet," and "ice cream" stores would all be considered "perishable" and would be configured accordingly. FIG. 5 shows a simplified example of a lookup table as disclosed herein for purposes of illustration. More generally, any number of expected user inputs may be mapped to any number of predefined categories. As previously disclosed, text matching techniques, heuristics, regular expression and other variable matching techniques, and any other suitable approach may be used to map user-provided business types to any number of predefined categories available in the system. The predefined categories and associated configuration settings may be set by the entity that manages the locker bank system. In some embodiments, the predefined categories and associated business profiles and configuration settings may be updated from time to time by the locker bank system, for example to implement new configuration settings, to make adjustments in how particular businesses operate in the locker bank network, and the like. For example, it may be found that certain businesses desire an increased level of security for pickup of items from the locker banks. In that case, the profiles for those businesses may be updated to require two-factor authentication or other security features when recipients retrieve items from the locker banks, which may not be required for other business type profiles.

As previously disclosed, when an ad-hoc enterprise is enrolled in a locker bank system, a profile may be created for the enterprise that includes predefined locker bank configuration settings that are appropriate for the type of business identified for the enterprise. The profile may be selected from a pre-defined list of common profiles, or it may be created as previously disclosed. In some embodiments, the ad-hoc enterprise may select from a pre-defined set of profiles. Table 1 shows examples of configuration options that may be automatically set in this way. Other configuration settings may be used, and the examples provided here may be used in any logical combination for individual enterprise profiles. Unless indicated otherwise, each option may be allowed or required by the system. For example, "login via username/password" may be selected as an allowed login method for the locker bank (such as when a user is depositing or retrieving an item), or it may be selected as a required login method for the locker bank. Some configurations may be assigned an integer or other numeric value, such as where a maximum number of failed login attempts is allowed before preventing further access, preventing further attempts before a timeout period, or the like.

**Table 1**

| **Configuration Category** | **Configuration Option(s)** |
|---|---|
| Locker Login | Allow for one or more types of credentials to log in to the system; may be selected by the owner of the local business, assigned based on business type, etc. |
| | Provide any combination of multiple types of login options (e.g., username/password, computer-readable code, etc.) |
| | Provide settings to link, import, or otherwise connect to existing user accounts on other services. |
| | Set login and account management preferences, such as automatic timeout period, and the like. |
| | |
| Item Delivery | Provide multiple parcel number entry interfaces, with specific interfaces selected for each profile |
| | Include options in the profile that specify how boxes in the locker bank are managed during delivery, e.g., ensuring all boxes related to a delivery/drop-off are empty before delivery, providing a mechanism for users delivering packages to mark a box as broken, unavailable, or the like. |
| | |
| Pickup/Receipt | Specify one or multiple types of codes and/or pickup modes that users can provide to retrieve parcels from the locker bank. |
| | |
| Dropoff by Recipient (Return) | Specify types of input allowed for package return by original recipient, e.g., scanning a barcode, entering an existing or one-time code, and the like. |
| | Provide options for mode of tracking alerts and confirmation receipts to shipper/recipient, for deliveries/returns, e.g., email or other electronic notification, app alerts, and the like. |
| | |
| Maintenance | Options for providing/allowing maintenance by the locker system owner/manager, such as accessing hardware information, changing individual locker status, modifying operational controls such as display options, screen settings, and the like. |

In some embodiments, the ad-hoc user may be provided with a "portal" view to allow access to existing parcel information such as parcels delivered to locker banks but not yet picked up, recent shipments (delivered and not yet picked up), historical shipments, payment histories, and the like. In some embodiments, the locker bank system may allow for integration with other existing logistics systems, communication systems, and the like. The ad-hoc enterprise profile may include settings that control integration options, including whether integrations are made available based on the business type of the entity. Other types of configurations that may be included in the ad-hoc enterprise profile stored by the locker bank system may include, for example, hardware-specific settings (such as where a locker bank system uses multiple types or versions of locker banks with different requirements or configuration options).

In some embodiments, a management server 110 as disclosed herein may reserve portions of one or more locker banks for use by ad-hoc enterprises, specific enrolled enterprises, or any combinations thereof. For example, the management server may reserve at least a minimum number or percentage of compartments in a given area for use by ad-hoc enterprises to make sure that there is always a minimum number or percentage of locker bank compartments available for use by ad-hoc customers. Such "internal" reservations may be shown to users, or they may be reserved "silently," i.e., without indicating to users that the reserved compartments are reserved for any particular type of use.

Notably, according to embodiments disclosed herein, no further configuration of the locker bank system, the ad-hoc enterprises logistics system or other information technology infrastructure, or any other system of the ad-hoc enterprise needs to be updated or configured before the enterprise makes use of the locker bank system. After the initial registration process is complete, the ad-hoc enterprise has access to the locker bank system and can begin sending and receiving deliveries via the locker banks. Such features are especially desirable as locker bank systems continue to become more automated and less reliant on human intervention. Embodiments disclosed herein provide beneficial improvements to conventional locker bank systems, even those that are relatively automatic, by removing technical barriers that otherwise would be insurmountable to smaller and less-sophisticated businesses. Embodiments disclosed herein also provide for more efficient use of already-computerized locker banks by providing greater access to the locker banks by a larger number and wider variety of end users.

Embodiments disclosed herein prove improvements and extensions to computerized, automated parcel delivery and reception systems including automated parcel locker banks and open locker systems. Such systems rely on the computerized communication, processing, and storage systems to provide the efficiency and volume of parcel delivery required by modern shipping and receiving systems. As such, the processes and systems disclosed herein could not reasonably be performed by humans, or in the human mind, or the like, due to the necessity of interfacing with existing computerized shipping systems, mobile devices and applications, automated postal routing systems and requirements, and the like. For example, the processes described herein could not be performed without the specialized devices, computer processors, and software disclosed in relation to the same. Furthermore, automated locker bank systems as disclosed herein are designed to prevent access by arbitrary users to the information stored therein, including the occupancy status of each locker, the recipient information stored in local databases at the locker bank, and the like. Accordingly, automated techniques and systems as disclosed herein are necessary to effectuate delivery of parcels to the automated parcel locker as disclosed, since the associated systems do not provide human-readable information and/or human-accessible components, other than as disclosed herein.

More generally, various embodiments may include or be embodied in the form of computer-implemented processes and apparatuses for practicing those processes. Embodiments also may be embodied in the form of a computer program product having computer program code containing instructions embodied in non-transitory and/or tangible media, such as floppy diskettes, CD-ROMs, hard drives, USB (universal serial bus) drives, or any other machine readable storage medium, such that when the computer program code is loaded into and executed by a computer, the computer becomes an apparatus for practicing embodiments of the disclosed subject matter. Embodiments also may be embodied in the form of computer program code, for example, whether stored in a storage medium, loaded into and/or executed by a computer, or transmitted over some transmission medium, such as over electrical wiring or cabling, through fiber optics, or via electromagnetic radiation, such that when the computer program code is loaded into and executed by a computer, the computer becomes an apparatus for practicing embodiments of the disclosed subject matter. When implemented on a general-purpose microprocessor, the computer program code segments configure the microprocessor to create specific logic circuits.

In some configurations, computer-readable instructions to implement techniques disclosed herein may be stored on a computer-readable storage medium and may be implemented by a general-purpose processor, execution of which may transform the general-purpose processor or a device containing the general-purpose processor into a special-purpose device configured to implement or carry out the instructions. Embodiments may be implemented using hardware that may include a processor, such as a general-purpose microprocessor and/or an Application Specific Integrated Circuit (ASIC) that embodies all or part of the techniques according to embodiments of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to embodiments of the disclosed subject matter.

The foregoing description, for purpose of explanation, has been described with reference to specific embodiments. However, the illustrative discussions above are not intended to be exhaustive or to limit embodiments of the disclosed subject matter to the precise forms disclosed. Many modifications and variations are possible in view of the above teachings. The embodiments were chosen and described in order to explain the principles of embodiments of the disclosed subject matter and their practical applications, to thereby enable others skilled in the art to utilize those embodiments as well as various embodiments with various modifications as may be suited to the particular use contemplated.

While the flow diagrams in the figures show a particular order of operations performed by certain implementations, such order is illustrative and not limiting. Other implementations and various embodiments may perform the operations in a different order, combine certain operations, perform certain operations in parallel, overlap performance of certain operations such that they are partially in parallel, and the like.

The above description includes several example implementations. However, it will be understood by one of skill in the art that the invention disclosed herein is not limited to the implementations described and can be practiced with modification and alteration within the spirit and scope of the appended claims. The description is thus illustrative instead of limiting.

## Claims

1. A method of operating a computerized locker bank system comprising a plurality of locker banks, the plurality of locker banks comprising a plurality of locker compartments, the method comprising:
receiving an enrollment request from a device associated with an enterprise not enrolled in the locker bank system;
receiving from the device identifying information for the enterprise, the identifying information comprising an indication of a business type of the enterprise;
responsive to receipt of the enrollment request and the identifying information and based on the business type indicated by the identifying information, automatically selecting by the computerized locker bank system a configuration profile from among a plurality of configuration profiles, each configuration profile defining a plurality of behaviors of the locker banks;
creating and storing a record assigning the configuration profile to the enterprise; and
subsequent to creating and storing the record and in response to one or more delivery requests initiated by the enterprise, operating one or more of the plurality of locker banks according to the plurality of behaviors in the configuration profile assigned to the enterprise.

2. The method of claim 1, wherein the step of automatically selecting the configuration profile further comprises:
determining that the business type in the identifying information is not present in a database of business types; and
responsive to the determination that the business type is not present in the database, based on the business type in the identifying information, selecting a business type from the database of business types.

3. The method of claim 2, wherein the business type selected from the database of business types comprises is selected based on a text match or heuristic match of the business type in the identifying information to the business type selected from the database.

4. The method of claim 2 wherein the business type selected from the database of business types comprises is selected based on an output of a machine learning system trained on a plurality of ad-hoc enterprises previously enrolled with the locker bank system.

5. The method of claim 1, further comprising:
receiving, from a user associated with the enterprise, an indication of an item to be delivered via a locker bank of the plurality of locker banks in the locker bank network.

6. The method of claim 5, wherein the item to be delivered is received from a customer of the enterprise, the method further comprising:
generating a delivery code;
sending the delivery code to the customer of the enterprise;
responsive to receiving the delivery code from a mobile device of the customer, sending a notification to the enterprise that the item was received at a compartment of the locker bank.

7. The method of claim 6, wherein the notification is sent to the enterprise also in response to receiving the item at the compartment of the locker bank.

8. The method of claim 5, wherein the item to delivered from the enterprise to a customer of the enterprise, the method further comprising:
receiving identifying information from the enterprise at a locker bank of the plurality of locker banks;
opening a compartment of the locker bank; and
responsive to the compartment being closed, a confirmation by the enterprise that the item was placed in the compartment, or both, sending a notification to the customer that the item was delivered to the locker bank.

9. The method of claim 1, wherein the plurality of behaviors of the locker banks in the configuration profile are selected based on previous behaviors of enterprises enrolled in the locker bank system having the same or similar business type as the business type listed in the identifying information for the enterprise.

10. A parcel locker bank system comprising:
a management server system comprising one or more management servers; and
a plurality of locker banks, each locker bank comprising a plurality of locker compartments available to receive and store items;
wherein the management server system is configured to operate the locker banks in conjunction with ad-hoc enterprises enrolled in the locker bank system by:
receiving an enrollment request from a device associated with an enterprise not enrolled in the locker bank system;
receiving from the device identifying information for the enterprise, the identifying information comprising an indication of a business type of the enterprise;
responsive to receipt of the enrollment request and the identifying information and based on the business type indicated by the identifying information, automatically selecting by the computerized locker bank system a configuration profile from among a plurality of configuration profiles, each configuration profile defining a plurality of behaviors of the locker banks;
creating and storing a record assigning the configuration profile to the enterprise; and
subsequent to creating and storing the record and in response to one or more delivery requests initiated by the enterprise, operating one or more of the plurality of locker banks according to the plurality of behaviors in the configuration profile assigned to the enterprise.

11. The locker bank system of claim 10, wherein the step of automatically selecting the configuration profile further comprises:
determining that the business type in the identifying information is not present in a database of business types; and
responsive to the determination that the business type is not present in the database, based on the business type in the identifying information, selecting a business type from the database of business types.

12. The locker bank system of claim 11, wherein the business type selected from the database of business types comprises is selected based on a text match or heuristic match of the business type in the identifying information to the business type selected from the database.

13. The locker bank system of claim 11 wherein the business type selected from the database of business types comprises is selected based on an output of a machine learning system trained on a plurality of ad-hoc enterprises previously enrolled with the locker bank system.

14. The locker bank system of claim 10, the management server further configured to:
receive, from a user associated with the enterprise, an indication of an item to be delivered via a locker bank of the plurality of locker banks in the locker bank network.

15. The locker bank system of claim 14, wherein the item to be delivered is received from a customer of the enterprise, the method further comprising:
generating a delivery code;
sending the delivery code to the customer of the enterprise;
responsive to receiving the delivery code from a mobile device of the customer, sending a notification to the enterprise that the item was received at a compartment of the locker bank.

16. The locker bank system of claim 15, wherein the notification is sent to the enterprise also in response to receiving the item at the compartment of the locker bank.

17. The locker bank system of claim 14, wherein the item to delivered from the enterprise to a customer of the enterprise, the management server further configured to operate in conjunction with the locker bank of the plurality of locker banks to:
receive identifying information from the enterprise at a locker bank of the plurality of locker banks;
open a compartment of the locker bank; and
responsive to the compartment being closed, a confirmation by the enterprise that the item was placed in the compartment, or both, send a notification to the customer that the item was delivered to the locker bank.

18. The locker bank system of claim 10, wherein the plurality of behaviors of the locker banks in the configuration profile are selected based on previous behaviors of enterprises enrolled in the locker bank system having the same or similar business type as the business type listed in the identifying information for the enterprise.
